# FASCICULE DE BREVET EUROPEEN

(11) **EP 3 099 742 B1**
(45) Date de publication et mention de la délivrance du brevet: **15.04.2020**
(21) Numéro de dépôt: 15701043.0
(22) Date de dépôt: 27.01.2015
(51) Int. Cl.: C08L 53/02, B60C 1/00

(54) **PNEUMATIQUE POURVU D'UNE BANDE DE ROULEMENT COMPRENANT UN ÉLASTOMÈRE THERMOPLASTIQUE**
REIFEN MIT EINER LAUFFLÄCHE MIT EINEM THERMOPLASTISCHEN ELASTOMER
TYRE PROVIDED WITH A TREAD COMPRISING A THERMOPLASTIC ELASTOMER

(30) Priorité: 28.01.2014 FR 1450667
(43) Date de publication de la demande: 07.12.2016
(73) Titulaire: Compagnie Générale des Etablissements Michelin, 63000 Clermont-Ferrand (FR)
(72) Inventeur: ABAD, Vincent, F-63040 Clermont-Ferrand Cedex 9 (FR); CUSTODERO, Emmanuel, F-63040 Clermont-Ferrand Cedex 9 (FR); CHOUVEL, Christophe, F-63040 Clermont-Ferrand Cedex 9 (FR); GREIVELDINGER, Marc, F-63040 Clermont-Ferrand Cedex 9 (FR)
(74) Mandataire: Wroblewski, Nicolas Paul André
(86) Numéro de dépôt international: PCT/EP2015/051588
(87) Numéro de publication internationale: WO 2015/113966

(56) Documents cités:
- WO-A1-2012/152686
- US-A1- 2006 089 447

## Description

La présente invention est relative aux pneumatiques munis d'une bande de roulement.

Dans un pneumatique conventionnel, la bande de roulement comprend des élastomères diéniques majoritairement.

Un objectif constant des manufacturiers de pneumatique est de diminuer la résistance au roulement des pneumatiques.

Dans le cadre du compromis entre l'amélioration de la résistance au roulement et de l'amélioration de l'adhérence des pneumatiques sur sol mouillé, les demanderesses ont décrit précédemment dans le document WO 2012/152686 un pneumatique muni d'une bande de roulement comprenant au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère). En particulier, les demanderesses ont décrit une bande de roulement comprenant comme élastomère thermoplastique le copolymère tribloc styrène-isoprène-styrène (SIS) comme permettant une diminution de la résistance au roulement par rapport aux bandes de roulement de composition classique.

A présent, les demanderesses ont trouvé de manière surprenante qu'un pneumatique pourvu d'une bande de roulement comprenant un élastomère thermoplastique spécifique permettait d'obtenir une très forte diminution de la résistance au roulement, y compris par rapport aux bandes de roulement en élastomère thermoplastique déjà décrites.

L'invention a donc pour objet un pneumatique comprenant une bande de roulement, un sommet avec une armature de sommet, deux flancs, deux bourrelets, une armature de carcasse ancrée aux deux bourrelets et s'étendant d'un flanc à l'autre, dans lequel la bande de roulement comprend au moins un élastomère thermoplastique, ledit élastomère thermoplastique étant un copolymère bloc comprenant au moins un bloc élastomère de type copolymère statistique butadiène-styrène hydrogéné et au moins un bloc thermoplastique de type styrénique, et le taux total d'élastomère thermoplastique étant compris dans un domaine variant de 65 à 100 pce (parties en poids pour cent parties d'élastomère).

Préférentiellement, l'invention concerne un pneumatique tel que défini ci-dessus, dans lequel la masse moléculaire moyenne en nombre de l'élastomère thermoplastique est comprise entre 30 000 et 500 000 g/mol.

Préférentiellement également, l'invention concerne un pneumatique tel que défini ci-dessus, dans lequel le ou les blocs élastomères du copolymère bloc sont choisis parmi les élastomères ayant une température de transition vitreuse inférieure à 25°C.

Préférentiellement encore, l'invention concerne un pneumatique tel que défini ci-dessus, dans lequel le ou les blocs élastomères SBR ont une teneur en styrène comprise dans un domaine allant de 10 à 60%.De préférence, le ou les blocs élastomères SBR ont une teneur en liaisons -1,2 pour la partie butadiénique comprise dans un domaine allant de 4% à 75% molaire, et une teneur en liaisons -1,4 comprise dans un domaine allant de 20% et 96% molaire. Dans la présente invention, le ou les blocs élastomères SBR sont hydrogénés de telle manière qu'une proportion allant de 25 à 100 % molaire des doubles liaisons dans la portion butadiène sont hydrogénées, plus préférentiellement, une proportion allant de 50 à 100 % molaire, et de préférence de 80 à 100 % molaire des doubles liaisons dans la portion butadiène sont hydrogénées.

De manière préférentielle, l'invention concerne un pneumatique tel que défini ci-dessus, dans lequel le ou les blocs thermoplastiques styréniques du copolymère bloc sont choisis parmi les polymères ayant une température de transition vitreuse supérieure à 80°C, et, dans le cas d'un bloc thermoplastique semi cristallin, une température de fusion supérieure à 80°C. De préférence, la fraction de bloc thermoplastique styrénique dans le copolymère bloc est comprise dans un domaine allant de 5 à 70 %.De préférence, le ou les blocs thermoplastiques du copolymère bloc sont choisis parmi les polystyrènes, préférentiellement parmi les polystyrènes obtenus à partir de monomères styréniques choisis dans le groupe constitué par le styrène non substitué, les styrènes substitués et leurs mélanges ; et plus préférentiellement, parmi les polystyrènes obtenus à partir de monomères styréniques choisis dans le groupe constitué par le styrène non substitué, les méthylstyrènes, le para-tertio-butylstyrène, les chlorostyrènes, les bromostyrènes, les fluorostyrènes, le para-hydroxy-styrène, et les mélanges de ces derniers. Très préférentiellement, le ou les blocs thermoplastiques du copolymère bloc sont choisis parmi les polystyrènes obtenus à partir de monomères styréniques choisis dans le groupe constitué par le styrène non substitué, l'o-méthylstyrène, le m-méthylstyrène, le p-méthylstyrène, l'alpha-méthylstyrène, l'alpha-2-diméthylstyrène, l'alpha-4-diméthylstyrène, le diphényléthylène, le para-tertio-butylstyrène, l'o-chlorostyrène, le m-chlorostyrène, le p-chlorostyrène, le 2,4-dichlorostyrène, le 2,6-dichlorostyrène, le 2,4,6-trichlorostyrène, l'o-bromostyrène, le m-bromostyrène, le p-bromostyrène, le 2,4-dibromostyrène, le 2,6-dibromostyrène, le 2,4,6-tribromostyrène, l'o-fluorostyrène, le m-fluorostyrène, le p-fluorostyrène, le 2,4-difluorostyrène, le 2,6-difluorostyrène, le 2,4,6-trifluorostyrène, le para-hydroxy-styrène, et les mélanges de ces derniers. Plus préférentiellement, le ou les blocs thermoplastiques du copolymère bloc sont obtenus à partir de polystyrène non substitué.

Préférentiellement, l'invention concerne un pneumatique tel que défini ci-dessus, dans lequel le ou les élastomères thermoplastiques sont les seuls élastomères de la bande de roulement.

Préférentiellement également, l'invention concerne un pneumatique tel que défini ci-dessus, dans lequel la bande de roulement comprend en outre une résine thermoplastique comprenant des motifs polyphénylène éther éventuellement substitués. De préférence, la résine thermoplastique à base de motifs polyphénylène éther éventuellement substitués présente une température de transition vitreuse (Tg), mesurée par DSC selon la norme ASTM D3418 de 1999, comprise dans un domaine allant de 0 à 215°C. De préférence également, la résine thermoplastique à base de motifs polyphénylène éther éventuellement substitués est un composé comprenant majoritairement des motifs polyphénylène de formule générale (I) : 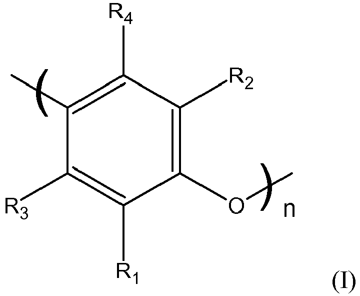 dans laquelle :
- R1, R2, R3 et R4 représentent indépendamment les uns des autres des groupements identiques ou différents choisis parmi les groupements hydrogène, hydroxy, alkoxy, halogène, amino, alkylamino, dialkylamino ou les groupements hydrocarbonés comportant au moins 2 atomes de carbone, éventuellement interrompus par des hétéroatomes et éventuellement substitués ; R1 et R3 d'une part et R2 et R4 d'autre part pouvant former ensemble avec les atomes de carbones auxquels ils se rattachent un ou plusieurs cycles accolés au cycle benzénique du composé de formule (I),
- n est un entier compris dans un domaine allant de 3 à 300.

Préférentiellement, l'invention concerne un pneumatique tel que défini ci-dessus, dans lequel R1 et R2 représentent un groupement alkyle et en particulier un groupe méthyle ; et R3 et R4 représentent des atomes d'hydrogène. De préférence également, le taux de ladite résine thermoplastique à base de motifs polyphénylène éther éventuellement substitués est compris dans un domaine allant de 1 à 90 pce, de préférence de 2 à 80 pce, plus préférentiellement, de 3 à 60 pce, mieux de 5 à 60 pce.

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### 1. Composition de la bande de roulement

Le pneumatique selon l'invention a pour caractéristique essentielle de comprendre une bande de roulement, un sommet avec une armature de sommet, deux flancs, deux bourrelets, une armature de carcasse ancrée aux deux bourrelets et s'étendant d'un flanc à l'autre, dans lequel la bande de roulement comprend au moins un élastomère thermoplastique, ledit élastomère thermoplastique étant un copolymère bloc comprenant au moins un bloc élastomère de type copolymère statistique butadiène-styrène hydrogéné et au moins un bloc thermoplastique de type styrénique, et le taux total d'élastomère thermoplastique étant compris dans un domaine variant de 65 à 100 pce (parties en poids pour cent parties d'élastomère).

### 1.1 Elastomère thermoplastique (TPE) spécifique à blocs SBR et PS

De manière générale, les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

Pour les besoins de l'invention, ledit élastomère thermoplastique spécifique est un copolymère bloc comprenant au moins un bloc élastomère de type copolymère statistique butadiène-styrène (SBR) hydrogéné et au moins un bloc thermoplastique de type copolymère styrénique (PS). Dans ce qui suit, lorsqu'il est fait référence à un bloc SBR, il s'agit donc d'un bloc élastomérique majoritairement (c'est-à-dire à plus de 50% en poids, de préférence à plus de 80 % en poids) composé d'un copolymère statistique de butadiène et de styrène, ce copolymère pouvant ou non être hydrogéné, et, lorsqu'il est fait référence à un bloc styrénique, il s'agit d'un bloc composé majoritairement (c'est-à-dire à plus de 50% en poids, de préférence à plus de 80 % en poids) d'un polymère styrénique tel qu'un polystyrène.

### 1.1.1. Structure du TPE à blocs SBR et PS

La masse moléculaire moyenne en nombre (notée Mn) du TPE à blocs SBR et PS est préférentiellement comprise entre 30 000 et 500 000 g/mol, plus préférentiellement comprise entre 40 000 et 400 000 g/mol. En dessous des minima indiqués, la cohésion entre les chaînes d'élastomère SBR du TPE à blocs SBR et PS, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol et mieux, de 60 000 à 150 000 était particulièrement bien adaptée, notamment à une utilisation du TPE à blocs SBR et PS dans une composition pour bande de roulement de pneumatique.

La masse moléculaire moyenne en nombre (Mn) de l'élastomère TPE à blocs SBR et PS est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE à blocs SBR et PS est de préférence inférieure à 3 ; plus préférentiellement inférieure à 2 et encore plus préférentiellement inférieure à 1,5.

De manière connue, les TPE à blocs SBR et PS présentent deux pics de température de transition vitreuse (Tg, mesurée selon ASTM D3418), la température la plus basse étant relative à la partie élastomère SBR du TPE à blocs SBR et PS, et la température la plus haute étant relative à la partie thermoplastique PS du TPE à blocs SBR et PS. Ainsi, les blocs souples SBR des TPE à blocs SBR et PS se définissent par une Tg inférieure à la température ambiante (25°C), tandis que les blocs rigides PS ont une Tg supérieure à 80°C.

Dans la présente demande, lorsqu'il est fait référence à la température de transition vitreuse du TPE à blocs SBR et PS, il s'agit de la Tg relative au bloc élastomère SBR. Le TPE à blocs SBR et PS présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la Tg du TPE à blocs SBR et PS est plus préférentiellement encore inférieure ou égale à -10°C. De manière préférentielle également, la Tg du TPE à blocs SBR et PS est supérieure à -100°C.

Les TPE à blocs SBR et PS peuvent être des copolymères avec un petit nombre de blocs (moins de 5, typiquement 2 ou 3), auquel cas ces blocs ont de préférence des masses élevées, supérieures à 15000 g/mol. Ces TPE à blocs SBR et PS peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène/styrène pour un copolymère blocs styrène/ SBR/ styrène).

Les TPE à blocs SBR et PS peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE à blocs SBR et PS seront appelés TPE à blocs SBR et PS multiblocs par la suite, et sont un enchaînement blocs élastomères - blocs thermoplastiques.

Selon une première variante, le TPE à blocs SBR et PS se présente sous une forme linéaire. Par exemple, le TPE à blocs SBR et PS est un copolymère dibloc : bloc PS / bloc SBR. Le TPE à blocs SBR et PS peut aussi être un copolymère tribloc : bloc PS / bloc SBR / bloc PS, c'est-à-dire un bloc élastomère central et de deux blocs thermoplastiques terminaux, à chacune des deux extrémités du bloc élastomère. Egalement, le TPE à blocs SBR et PS multibloc peut être un enchaînement linéaire de blocs élastomères SBR - blocs thermoplastiques PS.

Selon une autre variante de l'invention, le TPE à blocs SBR et PS utile pour les besoins de l'invention se présente sous une forme étoilée à au moins trois branches. Par exemple, le TPE à blocs SBR et PS peut alors se composer d'un bloc élastomère SBR étoilé à au moins trois branches et d'un bloc thermoplastique PS, situé à l'extrémité de chacune des branches du bloc élastomère SBR. Le nombre de branches de l'élastomère central peut varier, par exemple de 3 à 12, et de préférence de 3 à 6.

Selon une autre variante de l'invention, le TPE à blocs SBR et PS se présente sous une forme branchée ou dendrimère. Le TPE à blocs SBR et PS peut alors se composer d'un bloc élastomère SBR branché ou dendrimère et d'un bloc thermoplastique PS, situé à l'extrémité des branches du bloc élastomère dendrimère.

### 1.1.2. Nature des blocs élastomères

Les blocs élastomères du TPE à blocs SBR et PS pour les besoins de l'invention, peuvent être tous les élastomères de type copolymère statistique de butadiène et de styrène (SBR) connus de l'homme de l'art.

La fraction de bloc élastomère SBR dans le TPE à blocs SBR et PS est comprise dans un domaine allant de 30 à 95 %, préférentiellement de 40 à 92 %, plus préférentiellement de 50 à 90%.

Ces blocs SBR possèdent de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg des blocs SBR est supérieure à -100°C. Conviennent notamment, les blocs SBR ayant une Tg comprise entre 20°C et -70°C et plus particulièrement entre 0°C et -50°C.

De manière bien connue, le bloc SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée.

De manière préférentielle, on utilise notamment un bloc SBR ayant une teneur en styrène comprise, par exemple dans un domaine allant de 10 à 60% en poids, de préférence de 20% à 50% en poids, et pour la partie butadiénique, une teneur en liaisons -1,2 comprise dans un domaine allant de 4% à 75% (% molaire), et une teneur en liaisons -1,4 comprise dans un domaine allant de 20% et 96% (% molaire).

Selon le taux d'hydrogénation du bloc SBR, la teneur en double liaison de la partie butadiénique du bloc SBR peut diminuer jusqu'à une teneur de 0% molaire pour un bloc SBR totalement hydrogéné. Dans les TPE à blocs SBR et PS utiles aux besoins de l'invention, le bloc élastomère SBR est hydrogéné de telle manière qu'une proportion allant de 25 à 100 % molaire des doubles liaisons dans la portion butadiène sont hydrogénées. Plus préférentiellement de 50 à 100% molaire et de manière très préférentielle de 80 à 100% molaire des doubles liaisons dans la portion butadiène sont hydrogénées.

Au sens de la présente invention, la partie styrénique des blocs SBR peut être composée par des monomères choisis parmi les monomères styréniques, et notamment choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et les 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et les 2,4,6-trifluorostyrène), le para-hydroxy-styrène, et les mélanges de ces derniers.

Selon un mode de réalisation préférentiel de l'invention, les blocs élastomères du TPE à blocs SBR et PS présentent au total, une masse moléculaire moyenne en nombre ("Mn") allant de 25 000 g/mol à 350 000g/mol, de préférence de 35 000 g/mol à 250 000 g/mol de manière à conférer au TPE à blocs SBR et PS de bonnes propriétés élastomériques et une tenue mécanique suffisante et compatible avec l'utilisation en bande de roulement de pneumatique.

Le bloc élastomère peut également être constitué de plusieurs blocs élastomères tels que définis ci-dessus.

### 1.1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en œuvre industrielle (transformation). Dans le cas d'un polymère (ou d'un bloc de polymère) amorphe, la température de mise en œuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en œuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise œuvre.

Pour les besoins de l'invention, les élastomères TPE à blocs SBR et PS comprennent un ou plusieurs bloc(s) thermoplastique(s) ayant de préférence une Tg (ou Tf, le cas échéant) supérieure ou égale à 80°C et constitué(s) à partir de monomères styréniques polymérisés (PS). Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La fraction de bloc thermoplastique PS dans le TPE à blocs SBR et PS est comprise dans un domaine allant de 5 à 70 %, préférentiellement de 8 à 60 %, plus préférentiellement de 10 à 50%.

Les blocs thermoplastiques du TPE à blocs SBR sont des blocs polystyrènes. Les polystyrènes préférentiels sont obtenus à partir de monomères styréniques choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et le 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et le 2,4,6-trifluorostyrène), le para-hydroxy-styrène, et les mélanges de ces derniers.

De manière très préférentielle, les blocs thermoplastiques du TPE à blocs SBR sont des blocs obtenus à partir de polystyrène non substitué.

Selon une variante de l'invention, le bloc polystyrène tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Selon l'invention, les blocs thermoplastiques du TPE à blocs SBR et PS présentent au total, une masse moléculaire moyenne en nombre ("Mn") allant de 5 000 g/mol à 150 OOOg/mol, de manière à conférer au TPE à blocs SBR et PS de bonnes propriétés élastomériques et une tenue mécanique suffisante et compatible avec l'utilisation en bande de roulement de pneumatique.

Le bloc thermoplastique peut également être constitué de plusieurs blocs thermoplastiques tels que définis ci-dessus.

### 1.1.4. Exemples de TPE à blocs SBR et PS

A titre d'exemples d'élastomères TPE à blocs SBR et PS commercialement disponibles, on peut citer les élastomères de type SOE, commercialisés par la société Asahi Kasei sous la dénomination « SOE S1611 », « SOE L605 » ou encore « SOE L606 ».

### 1.1.5. Quantité de TPE à blocs SBR et PS

Si d'éventuels autres élastomères (non thermoplastiques) sont utilisés dans la composition, le ou les élastomères TPE à blocs SBR et PS constituent la fraction majoritaire en poids ; ils représentent alors au moins 65%, de préférence au moins 70% en poids, plus préférentiellement au moins 75% en poids de l'ensemble des élastomères présents dans la composition élastomère. De manière préférentielle également, le ou les élastomères TPE à blocs SBR et PS représentent au moins 95% (en particulier 100%) en poids de l'ensemble des élastomères présents dans la composition élastomère.

Ainsi, la quantité d'élastomère TPE à blocs SBR et PS est comprise dans un domaine qui varie de 65 à 100 pce, préférentiellement de 70 à 100 pce et notamment de 75 à 100 pce. De manière préférentielle également, la composition contient de 95 à 100 pce d'élastomère TPE à blocs SBR et PS. Le ou les élastomères TPE à blocs SBR et PS sont préférentiellement le ou les seuls élastomères de la bande de roulement.

### 1.2 Elastomère Non Thermoplastique

Le ou les élastomères thermoplastiques décrits précédemment sont suffisants à eux seuls pour que soit utilisable la bande de roulement selon l'invention.

La composition de la bande de roulement selon l'invention, peut comporter au moins un (c'est-à-dire un ou plusieurs) caoutchouc diénique à titre d'élastomère non thermoplastique, ce caoutchouc diénique pouvant être utilisé seul, ou en coupage avec au moins un (c'est-à-dire un ou plusieurs) autre caoutchouc ou élastomère non thermoplastique.

Le taux total d'élastomère non thermoplastique, optionnel, est compris dans un domaine variant de 0 à 35 pce, préférentiellement de 0 à 30 pce, plus préférentiellement de 0 à 25 pce, et plus préférentiellement encore de 0 à 5 pce. Ainsi, lorsque la bande de roulement en contient, les élastomères non thermoplastiques représentent au plus 35 pce, préférentiellement au plus 30 pce, plus préférentiellement au plus 25 pce et de manière très préférentielle au plus 5 pce. De manière très préférentielle également, la bande de roulement du pneumatique selon l'invention ne contient pas d'élastomère non thermoplastique.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la bande de roulement du pneumatique selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### 1.3. Résine PPE

Le ou les élastomères thermoplastiques décrits précédemment sont suffisants à eux seuls pour que soit utilisable la bande de roulement selon l'invention.

De manière préférentielle, la composition selon l'invention peut comprendre en outre une résine thermoplastique à base de motifs polyphénylène éther éventuellement substitués (en abrégé « résine PPE »). Ce type de composé est décrit par exemple dans l'encyclopédie « Ullmann's encyclopédia of industrial chemistry » éditée par VCH, vol A 21, pages 605-614, 5e édition, 1992.

La résine PPE utile aux besoins de l'invention présente préférentiellement une température de transition vitreuse (Tg), mesurée par DSC selon la norme ASTM D3418 de 1999 comprise dans un domaine allant de 0 à 215°C, de préférence de 5 à 200°C et plus préférentiellement de 5 à 185°C. En dessous de 0°C, la résine PPE ne permet pas un décalage de Tg suffisant dans la composition la comprenant et au-dessus de 215°C, on peut rencontrer des problèmes de fabrication notamment pour obtenir un mélange homogène.

De préférence, la résine PPE est un composé comprenant majoritairement des motifs polyphénylène de formule générale (I) : 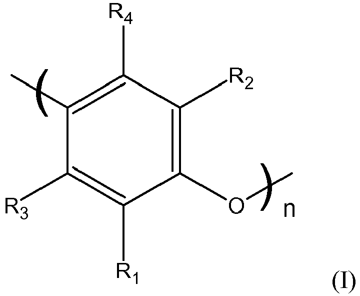 dans laquelle :
- R1, R2, R3 et R4 représentent indépendamment les uns des autres des groupements identiques ou différents choisis parmi l'hydrogène ; les groupements hydroxy, alkoxy, halogène, amino, alkylamino, dialkylamino ; les groupements hydrocarbonés comportant au moins 2 atomes de carbone, éventuellement interrompus par des hétéroatomes et éventuellement substitués ; R1 et R3 d'une part et R2 et R4 d'autre part peuvent former ensemble avec les atomes de carbones auxquels ils se rattachent un ou plusieurs cycles accolés au cycle benzénique du composé de formule (I)
- n est un entier compris dans un domaine allant de 3 à 300.

Préférentiellement, R1, R2, R3 et R4 représentent indépendamment les uns des autres des groupements identiques ou différents choisis parmi :
- l'hydrogène
- les groupements hydroxy, alkoxy, halogène, amino, alkylamino, dialkylamino,
- les groupements alkyles linéaire, ramifiés ou cycliques, comprenant de 1 à 25 atomes de carbone (de préférence de 2 à 18), éventuellement interrompus par des hétéroatomes choisis parmi l'azote, l'oxygène et le soufre, et éventuellement substitués par des groupements hydroxy, alkoxy, amino, alkylamino, dialkylamino, ou halogène.
- les groupements aryles comprenant de 6 à 18 atomes de carbones (de préférence de 6 à 12), éventuellement substitués par des groupements hydroxy, alkoxy, amino, alkylamino, dialkylamino, alkyle, ou halogène,

Plus préférentiellement, R1, R2, R3 et R4 représentent indépendamment les uns des autres des groupements identiques ou différents choisis parmi :
- l'hydrogène
- les groupements hydroxy, alkoxy comportant de 1 à 6 atomes de carbone, halogène, amino, alkylamino comportant de 1 à 6 atomes de carbone, dialkylamino comportant de 2 à 12 atomes de carbone,
- les groupements alkyles linéaire, ramifiés ou cycliques, comprenant de 1 à 12 atomes de carbone (de préférence de 2 à 6), éventuellement interrompus par des hétéroatomes et éventuellement substitués par des groupements hydroxy, alkoxy comportant de 1 à 6 atomes de carbone, amino, alkylamino comportant de 1 à 6 atomes de carbone, dialkylamino comportant de 2 à 12 atomes de carbone, ou halogène.
- les groupements aryles comprenant de 6 à 18 atomes de carbones (de préférence de 6 à 12), éventuellement substitués par des groupements hydroxy, alkoxy comportant de 1 à 6 atomes, amino, alkylamino comportant de 1 à 6 atomes, dialkylamino comportant de 2 à 12 atomes de carbone, alkyle comportant de 1 à 12 atomes de carbone, ou halogène.

Encore plus préférentiellement, R1 et R2 représentent un groupement alkyle et en particulier un groupe méthyle ; et R3 et R4 représentent des atomes d'hydrogène. Dans ce cas, la résine PPE est un poly(2,6-diméthyl-1,4-phénylène éther).

De manière préférentielle également, n est un entier compris dans un domaine allant de 3 à 50, plus préférentiellement de 5 à 30, de préférence de 6 à 20.

De préférence, la résine PPE est un composé comprenant à plus de 80% en poids, et plus préférentiellement encore à plus de 95% en poids, des motifs polyphénylène de formule générale (I).

A titre d'exemples, on peut citer le poly(2,6-diméthyl-1,4-phénylène éther) et notamment le « Noryl SA 120 » de la société Sabic ou le « Xyron S202A » de la société Asahi Kasei.

De manière connue, les résines PPE ont par exemple et préférentiellement des masses moléculaires moyennes en nombre (Mn) variables, le plus souvent de 15000 à 30000 g/mol, dans le cas des hautes masses comme celles-ci, la Mn est mesurée de manière connue de l'homme de l'art par SEC (encore nommée GPC, comme dans la référence US4588806, colonne 8). Pour les besoins de l'invention, peut également et préférentiellement également utiliser pour la composition de l'invention une résine PPE possédant une masse Mn inférieure aux masses régulièrement rencontrées et notamment inférieure à 6000 g/mol, de préférence inférieure à 3500 g/mol et en particulier une Mn comprise dans un domaine variant de 700 à 2500 g/mol. La masse moléculaire moyenne en nombre (Mn) des PPE de masse inférieure à 6000 g/mol est mesurée par RMN, la mesure classique par SEC n'étant pas suffisamment précise. Cette mesure par RMN est effectuée de manière connue de l'homme de l'art, soit par dosage des fonctions bout de chaine, soit par dosage des initiateurs de polymérisation, comme explicité par exemple dans « Application of NMR spectroscopy in molecular weight détermination of polymers » de Subhash C. Shit et Sukumar Maiti dans « European Polymer Journal » vol.22, n°12, pages 1001 à 1008 (1986).

Préférentiellement, la valeur de l'indice de polydispersité Ip (rappel : Ip = Mw/Mn avec Mw masse moléculaire moyenne en poids et Mn masse moléculaire moyenne en nombre) de la résine PPE est inférieure ou égale à 5, plus préférentiellement inférieure ou égale à 3 et plus préférentiellement encore inférieure ou égale à 2.

Le taux de résine PPE dans la composition est préférentiellement compris dans un domaine allant de 1 à 90 pce, plus préférentiellement de 2 à 80 pce, plus préférentiellement encore de 3 à 60 pce et très préférentiellement de 5 à 60 pce.

### 1.4. Charge nanométrique ou renforçante

Le ou les élastomères thermoplastiques décrits précédemment sont suffisants à eux seuls pour que soit utilisable la bande de roulement selon l'invention. De manière préférentielle, la composition selon l'invention peut comprendre en outre une charge renforçante.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition (noir de carbone et/ou charge inorganique renforçante telle que silice) est compris dans un domaine de 0 à 20%, ce qui correspond à un taux de 0 à 50 pce pour une composition sans plastifiant. Préférentiellement la composition comprend moins de 30 pce de charge renforçante et plus préférentiellement moins de 10 pce. Selon une variante préférentielle de l'invention, la composition de la bande de roulement ne contient pas de charge renforçante.

### 1.5. Additifs divers

Le ou les élastomères thermoplastiques décrits précédemment sont suffisants à eux seuls pour que soit utilisable la bande de roulement selon l'invention.

Toutefois, selon un mode de réalisation préférentiel de l'invention, la composition élastomère précédemment décrite peut comporter également, un agent plastifiant, tel qu'une huile (ou huile plastifiante ou huile d'extension) ou une résine plastifiante dont la fonction est de faciliter la mise en œuvre de la bande de roulement, particulièrement son intégration au pneumatique par un abaissement du module et une augmentation du pouvoir tackifiant.

On peut utiliser toute huile, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier.

L'homme du métier saura, à la lumière de la description et des exemples de réalisation qui suivent, ajuster la quantité de plastifiant en fonction de l'élastomère TPE à blocs SBR et PS utilisé (comme indiqué précédemment) ; des conditions particulières d'usage du pneumatique muni de la bande de roulement, et notamment en fonction de l'objet pneumatique dans lequel elle est destinée à être utilisée.

Lorsqu'elle est utilisée, on préfère que le taux d'huile d'extension soit compris dans un domaine variant de 0 à 80 pce, préférentiellement de 0 à 50 pce, plus préférentiellement de 5 à 50 pce selon la Tg et le module visés pour la bande de roulement.

La bande de roulement décrite précédemment peut comporter par ailleurs les divers additifs usuellement présents dans les bandes de roulements connues de l'homme du métier. On choisira par exemple un ou plusieurs additifs choisis parmi les agents de protection tels que antioxydants ou antiozonants, anti-UV, les divers agents de mise en œuvre ou autres stabilisants, ou encore les promoteurs aptes à favoriser l'adhésion au reste de la structure de l'objet pneumatique. De manière préférentielle, la bande de roulement ne contient pas tous ces additifs en même temps et de manière encore plus préférentielle, bande de roulementne contient aucun de ces agents.

Egalement et à titre optionnel, la composition de la bande de roulement de l'invention peut contenir un système de réticulation connu de l'homme du métier. Préférentiellement, la composition ne contient pas de système de réticulation. De la même manière, la composition de la bande de roulement de l'invention peut contenir une ou plusieurs charges micrométriques, inertes telles que les charges lamellaires connues de l'homme de l'art. De préférence, la composition de contient pas de charge micrométrique.

### 2. Préparation

Les élastomères TPE à blocs SBR et PS peuvent être mis en œuvre de façon classique pour des TPE, par extrusion ou moulage, par exemple à partir d'une matière première disponible sous la forme de billes ou de granulés.

La bande de roulement pour le pneumatique selon l'invention est préparée de façon classique, par exemple, par incorporation des différents composants dans une extrudeuse bi-vis, de façon à réaliser la fusion de la matrice et une incorporation de tous les ingrédients, puis utilisation d'une filière permettant de réaliser le profilé. La bande de roulement est ensuite sculptée dans le moule de cuisson du pneumatique.

Si le bloc élastomère du TPE à blocs SBR et PS est un bloc SBR totalement hydrogéné, il pourra être nécessaire d'inclure au pneumatique une sous-couche ou couche d'adhésion sous la portion sculptée de la bande de roulement qui contiendra un TPE à blocs SBR et PS à bloc élastomère insaturé pour favoriser l'adhésion entre ladite bande de roulement et la couche adjacente (par exemple l'armature de sommet ou ceinture) au sein du pneumatique fini.

Cette bande de roulement peut-être montée sur un pneumatique de manière classique, ledit pneumatique comprenant en plus de la bande de roulement selon l'invention, un sommet, deux flancs et deux bourrelets, une armature de carcasse ancrée aux deux bourrelets, et une armature de sommet. Optionnellement et comme indiqué précédemment, le pneumatique selon l'invention peut comprendre en outre une sous-couche ou une couche d'adhésion entre la portion sculptée de la bande de roulement et l'armature de sommet.

### EXEMPLES DE RÉALISATION DE L'INVENTION

Des compositions de bande de roulement pour pneumatique selon l'invention ont été préparées comme indiqué précédemment.

Des pneumatiques selon l'invention ont ensuite été préparés selon les méthodes habituelles, avec les constituants classiques connus de l'homme du métier : un sommet, deux flancs et deux bourrelets, une armature de carcasse ancrée aux deux bourrelets, une armature de sommet et une bande de roulement, la bande de roulement étant celle décrite pour les besoins de la présente invention.

Les propriétés des pneumatiques selon l'invention peuvent être évaluées par des tests effectués sur des pneumatiques ou à partir de tests sur des échantillons de composition de bande de roulement comme indiqué ci-après.

### Propriétés dynamiques (après cuisson)

Les propriétés dynamiques G* et tan(δ)max sont mesurées sur un viscoanalyseur (Metravib V A4000), selon la norme ASTM D 5992 - 96. On enregistre la réponse d'un échantillon de composition voulue (éprouvette cylindrique de 2 mm d'épaisseur et de 78 mm² de section), soumis à une sollicitation sinusoïdale en cisaillement simple alterné, à la fréquence de 10Hz, à une température de 40°C et selon la norme ASTM D 1349 - 99. On effectue un balayage en amplitude de déformation crête à crête de 0,1 à 50% (cycle aller), puis de 50% à 0,1%(cycle retour). Les résultats exploités sont le module complexe de cisaillement dynamique (G*) et le facteur de perte (tan δ). Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne). Pour plus de lisibilité les résultats seront indiqués en performance en base 100, la valeur 100 étant attribuée au témoin. Ainsi, pour la mesure de (tan δ), un résultat supérieur à 100, indiquera une meilleure performance et donc une diminution de la valeur concernée, et inversement, un résultat inférieur à 100 indique une moindre performance et donc une augmentation de la valeur concernée.

### Mesures de E "

La méthode de mesure de E" se fait au moyen d'une machine DMA METRAVIB 450+ équipée des plateaux de compression PET10003000B. L'essai réalisé est un essai de compression dynamique sur un échantillon cylindrique de diamètre 10mm et de hauteur 15mm.

La formulation TPE ou le mélange élastomère cru choisi est d'abord mis sous forme de feuille (ex : sous presse pour le TPE, au mélangeur à cylindres pour le mélange élastomères). On vient ensuite découper des petits disques de 10mm de diamètre au moyen d'un emporte-pièce. On empile ces disques jusqu'à obtenir une hauteur d'au moins 15mm.

Ces disques empilés sont ensuite placés dans un moule dont les dimensions internes sont 10mm de diamètre et 15mm de haut. Le tout est passé en presse pour faire fondre le mélange non réticulable ou cuire le mélange réticulable et constituer un échantillon cylindrique de 10mm de diamètre et de 15mm de haut.

Typiquement ce traitement thermique de cuisson (pour le mélange réticulable) ou de mise en forme (pour le mélange non réticulable) est de 17min à 170°C sous 16bars. Après mise en forme, et le cas échéant, cuisson, l'échantillon cylindrique obtenu est solidarisé aux plateaux de compression au moyen d'une colle Loctite 406. Une goutte de cette colle est d'abord déposée au centre du plateau inférieur. On pose l'échantillon cylindrique sur cette goutte et on dépose une seconde goutte au-dessus de celui-ci. On vient ensuite descendre la traverse du Metravib pour venir coller le plateau supérieur sur le dessus de l'échantillon, en prenant garde de ne pas l'écraser (force pratiquement nulle).

Après quelques minutes de séchage de la colle, on applique à cet échantillon cylindrique, une sollicitation sinusoïdale à un taux de déformation statique de 10% et un taux de déformation dynamique de 0,1% à 1 Hz. On étudie la variation du module E" en fonction de la température pour une plage variant 40°C à 200°C avec une vitesse de variation de 1°C/min.

Typiquement, on obtient alors un tracé de l'évolution du module E" en fonction de la température. A partir de cette courbe, on peut extraire des valeurs la température correspondant au maximum de E" Cette température maximum est représentative, pour les compositions à base de thermoplastique, de la transition vitreuse de la composition qui traduit sa tenue thermique. Pour plus de lisibilité les résultats seront indiqués en performance en base 100, la valeur 100 étant attribuée au témoin. Un résultat inférieur à 100 indiquant une diminution de la performance concernée, et inversement, un résultat supérieur à 100, indiquera une augmentation de la performance concernée.

### EXEMPLE

Trois compositions de bande de roulement de pneumatique conformes à l'invention (A3, A4 et A5) ont été préparées comme indiqué précédemment et comparées à deux témoins : une composition de bande de roulement de pneumatique témoin de type « Pneu vert » à basse résistance au roulement (A1), et une composition pour bande de roulement telle que décrite dans le document WO 2012/152686 (A2). Les compositions de ces bandes de roulement sont présentées dans le tableau 1 ci-dessous.

**Tableau 1**

| Composition | A-1 | A-2 | A-3 | A-4 | A-5 |
|---|---|---|---|---|---|
| SBR (1) | 40 | 0 | 0 | 0 | 0 |
| SBR (2) | 60 | 0 | 0 | 0 | 0 |
| Elastomère TPE (3) | 0 | 100 | 0 | 0 | 0 |
| Elastomère TPE (4) | 0 | 0 | 100 | 100 | 100 |
| Charge (5) | 90 | 0 | 0 | 0 | 0 |
| Agent de couplage (6) | 7,5 | 0 | 0 | 0 | 0 |
| Noir de carbone (7) | 4 | 0 | 0 | 0 | 0 |
| Plastifiant liquide 1 (8) | 20 | 0 | 0 | 0 | 0 |
| Plastifiant liquide 2 (9) | 0 | 20 | 0 | 0 | 0 |
| Résine (10) | 20 | 0 | 0 | 0 | 0 |
| Résine PPE 1 (11) | | | 0 | 18 | 0 |
| Résine PPE 2 (12) | | | 0 | 0 | 18 |
| Cire anti-ozone | 1,5 | 0 | 0 | 0 | 0 |
| Agent anti-oxydant (13) | 2 | 0 | 0 | 0 | 0 |
| DPG (14) | 1,5 | 0 | 0 | 0 | 0 |
| ZnO (15) | 2,75 | 0 | 0 | 0 | 0 |
| Acide stéarique(16) | 2 | 0 | 0 | 0 | 0 |
| CBS (17) | 2,1 | 0 | 0 | 0 | 0 |
| Soufre | 1,4 | 0 | 0 | 0 | 0 |

| | | | | | |
|---|---|---|---|---|---|
| (1) SSBR solution (taux exprimés en SBR sec : 41% de styrène, 24 % des motifs polybutadiène en 1-2 et 51% des motifs polybutadiène en 1-4 trans (Tg = - 25°C) ; (2) SSBR solution (taux exprimés en SBR sec : 29% de styrène, 5 % des motifs polybutadiène en 1-2 et 80% des motifs polybutadiène en 1-4 trans (Tg = - 56°C) ; (3) Elastomère thermoplastique SIS « Hybrar 5125 » de la société Kuraray ; (4) Elastomère thermoplastique SOE « SOE L606 » de la société Asahi Kasei ; (5) Silice (« Zeosil 1165MP » de la société Rhodia) ; (6) agent de couplage TESTP (« Si69 » de la société Degussa) ; (7) Noir de carbone N234 ; (8) Huile TDAE « Vivatec 500 » de la société Hansen & Rosenthal (9) Huile paraffinique « Extensoil 51 24T » de la société Repsol, ou « Tudalen 1968 » de la société Klaus Dahleke ; (10) Résine C5/C9 « CrayValley Wingtack » de la société STS ; (11) Résine PPE 1 Poly(2,6-diméthyl-1,4-phénylène éther) « Noryl SA120 » de la société Sabic, Mn = 2350 g/mol ; (12) Résine PPE 2 Poly(2,6-diméthyl-1,4-phénylène éther) « Xyron S202 A » de la société Sabic, Mn = 19000g/mol ; (13) N-1,3-diméthylbutyl-N-phénylparaphénylènediamine (« Santoflex 6-PPD » de la société Flexsys) ; (14) DPG = Diphénylguanidine (« Perkacit DPG » de la société Flexsys) ; (15) oxyde de zinc (grade industriel - société Umicore) ; (16) stéarine (« Pristerene » de la société Uniquema); (17) N-cyclohexyl-2-benzothiazyl-sulfénamide (« Santocure CBS » de la société Flexsys). | | | | | |

On peut noter dans ces compositions la grande économie de moyens, liée à l'utilisation d'élastomères TPE à blocs SBR et PS dans la composition de la bande de roulement.

Les performances des compositions l'invention ont ensuite été évaluées quant à leur hystérèse et leur tenue thermique. Les résultats sont présentés dans le tableau 2.

**Tableau 2**

| Composition | A-1 | A-2 | A-3 | A-4 | A-5 |
|---|---|---|---|---|---|
| tan(δ)max à 40°C (base 100) | 100 | 123 | 386 | 300 | 300 |
| Température de E' max | - | - | 116 | 132 | 147 |

Les résultats présentés au tableau 2 mettent en évidence que les bandes de roulement de composition A3, A4 et A5 selon l'invention permettent une amélioration notable de performance en hystérèse, représentative de la performance en résistance au roulement. Par ailleurs, il est très surprenant au vu de l'état de la technique, que le TPE à blocs SBR et PS et une résine PPE, soit suffisants pour obtenir une bande de roulement dont les performances en hystérèse sont tellement améliorées, vis-à-vis d'une bande de roulement diénique conventionnelle mais également vis-à-vis d'une bande de roulement en TPE, telle que décrite dans le document WO 2012/152686.

Par ailleurs, les résultats montrent également pour les compositions A4 et A5 notamment une amélioration notable de la tenue thermique par rapport à la composition A3.

## Revendications

1. Pneumatique comprenant une bande de roulement, un sommet avec une armature de sommet, deux flancs, deux bourrelets, une armature de carcasse ancrée aux deux bourrelets et s'étendant d'un flanc à l'autre, **caractérisé en ce que** la bande de roulement comprend au moins un élastomère thermoplastique, ledit élastomère thermoplastique étant un copolymère bloc comprenant au moins un bloc élastomère de type copolymère statistique butadiène-styrène et au moins un bloc thermoplastique de type styrénique, le ou les blocs élastomères SBR étant hydrogénés de telle manière qu'une proportion allant de 25 à 100 % molaire des doubles liaisons dans la portion butadiène sont hydrogénées, et le taux total d'élastomère thermoplastique étant compris dans un domaine variant de 65 à 100 pce (parties en poids pour cent parties d'élastomère).

2. Pneumatique selon la revendication 1 dans lequel le ou les blocs élastomères SBR ont une teneur en styrène comprise dans un domaine allant de 10 à 60%.

3. Pneumatique selon l'une quelconque des revendications précédentes dans lequel le ou les blocs élastomères SBR ont une teneur en liaisons -1,2 pour la partie butadiénique comprise dans un domaine allant de 4% à 75% molaire, et une teneur en liaisons -1,4 comprise dans un domaine allant de 20% et 96% molaire.

4. Pneumatique selon l'une quelconque des revendications précédentes dans lequel le ou les blocs élastomères SBR sont hydrogénés de telle manière qu'une proportion allant de 50 à 100 % molaire, et de préférence de 80 à 100 % molaire des doubles liaisons dans la portion butadiène sont hydrogénées.

5. Pneumatique selon l'une quelconque des revendications précédentes dans lequel la fraction de bloc thermoplastique styrénique dans le copolymère bloc est comprise dans un domaine allant de 5 à 70 %.

6. Pneumatique selon l'une quelconque des revendications précédentes dans lequel le ou les blocs thermoplastiques du copolymère bloc sont choisis parmi les polystyrènes.

7. Pneumatique selon la revendication précédente dans lequel le ou les blocs thermoplastiques du copolymère bloc sont choisis parmi les polystyrènes obtenus à partir de monomères styréniques choisis dans le groupe constitué par le styrène non substitué, les styrènes substitués et leurs mélanges.

8. Pneumatique selon la revendication précédente dans lequel le ou les blocs thermoplastiques du copolymère bloc sont choisis parmi les polystyrènes obtenus à partir de monomères styréniques choisis dans le groupe constitué par le styrène non substitué, les méthylstyrènes, le para-tertio-butylstyrène, les chlorostyrènes, les bromostyrènes, les fluorostyrènes, le para-hydroxy-styrène, et les mélanges de ces derniers.

9. Pneumatique selon la revendication précédente dans lequel le ou les blocs thermoplastiques du copolymère bloc sont choisis parmi les polystyrènes obtenus à partir de monomères styréniques choisis dans le groupe constitué par le styrène non substitué, l'o-méthylstyrène, le m-méthylstyrène, le p-méthylstyrène, l'alpha-méthylstyrène, l'alpha-2-diméthylstyrène, l'alpha-4-diméthylstyrène, le diphényléthylène, le para-tertio-butylstyrène, l'o-chlorostyrène, le m-chlorostyrène, le p-chlorostyrène, le 2,4-dichlorostyrène, le 2,6-dichlorostyrène, le 2,4,6-trichlorostyrène, l'o-bromostyrène, le m-bromostyrène, le p-bromostyrène, le 2,4-dibromostyrène, le 2,6-dibromostyrène, le 2,4,6-tribromostyrène, l'o-fluorostyrène, le m-fluorostyrène, le p-fluorostyrène, le 2,4-difluorostyrène, le 2,6-difluorostyrène, le 2,4,6-trifluorostyrène, le para-hydroxy-styrène, et les mélanges de ces derniers.

10. Pneumatique selon la revendication précédente dans lequel le ou les blocs thermoplastiques du copolymère bloc sont obtenus à partir de polystyrène non substitué.

11. Pneumatique selon l'une quelconque des revendications précédentes, dans lequel le ou les élastomères thermoplastiques sont les seuls élastomères de la bande de roulement.

12. Pneumatique selon l'une quelconque des revendications 1 à 11, dans lequel la bande de roulement comprend en outre une résine thermoplastique comprenant des motifs polyphénylène éther éventuellement substitués.

13. Pneumatique selon la revendication 12 dans lequel la résine thermoplastique à base de motifs polyphénylène éther éventuellement substitués est un composé comprenant majoritairement des motifs polyphénylène de formule générale (I) : 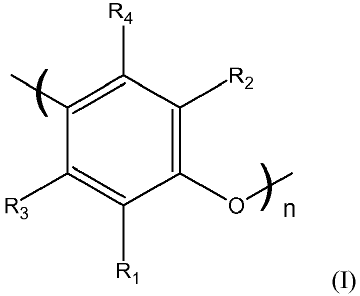 dans laquelle :
- R1, R2, R3 et R4 représentent indépendamment les uns des autres des groupements identiques ou différents choisis parmi les groupements hydrogène, hydroxy, alkoxy, halogène, amino, alkylamino, dialkylamino ou les groupements hydrocarbonés comportant au moins 2 atomes de carbone, éventuellement interrompus par des hétéroatomes et éventuellement substitués ; R1 et R3 d'une part et R2 et R4 d'autre part pouvant former ensemble avec les atomes de carbones auxquels ils se rattachent un ou plusieurs cycles accolés au cycle benzénique du composé de formule (I),
- n est un entier compris dans un domaine allant de 3 à 300.

14. Pneumatique selon l'une des revendications 12 ou 13, dans lequel le taux de ladite résine thermoplastique à base de motifs polyphénylène éther éventuellement substitués est compris dans un domaine allant de 1 à 90 pce, de préférence de 2 à 80 pce.

## Patentansprüche

1. Reifen, umfassend eine Lauffläche, einen Scheitel mit einer Scheitelbewehrung, zwei Seitenflächen, zwei Wülste, eine Karkassenbewehrung, die in den beiden Wülsten verankert ist und sich von einer Seitenfläche zur anderen erstreckt, **dadurch gekennzeichnet, dass** die Lauffläche mindestens ein thermoplastisches Elastomer umfasst, wobei es sich bei dem thermoplastischen Elastomer um ein Blockcopolymer mit mindestens einem Elastomerblock vom Typ statistisches Butadien-StyrolCopolymer und mindestens einem thermoplastischen Block vom Styrol-Typ handelt, wobei der SBR-Elastomerblock bzw. die SBR-Elastomerblöcke derart hydriert ist bzw. sind, dass ein Anteil im Bereich von 25 bis 100 Mol-% der Doppelbindungen in dem Butadien-Teil hydriert ist, und der Gesamtgehalt an thermoplastischem Elastomer in einem Bereich von 65 bis 100 phe (Gewichtsteile pro hundert Teile Elastomer) liegt.

2. Reifen nach dem vorhergehenden Anspruch, wobei der SBR-Elastomerblock bzw. die SBR-Elastomerblöcke einen Styrolgehalt in einem Bereich von 10 bis 60 % aufweist bzw. aufweisen.

3. Reifen nach einem der vorhergehenden Ansprüche, wobei der SBR-Elastomerblock bzw. die SBR-Elastomerblöcke einen Gehalt an 1,2-Bindungen für den Butadien-Teil in einem Bereich von 4 bis 75 Mol-% und einen Gehalt an 1,4-Bindungen in einem Bereich von 20 bis 96 Mol-% aufweist bzw. aufweisen.

4. Reifen nach einem der vorhergehenden Ansprüche, wobei der SBR-Elastomerblock bzw. die SBR-Elastomerblöcke derart hydriert ist bzw. sind, dass ein Anteil im Bereich von 50 bis 100 Mol-% und vorzugsweise 80 bis 100 Mol-% der Doppelbindungen in dem Butadien-Teil hydriert ist.

5. Reifen nach einem der vorhergehenden Ansprüche, wobei der Anteil des thermoplastischen Styrolblocks in dem Blockcopolymer in einem Bereich von 5 bis 70 % liegt.

6. Reifen nach einem der vorhergehenden Ansprüche, wobei der thermoplastische Block bzw. die thermoplastischen Blöcke des Blockcopolymers aus Polystyrolen ausgewählt ist bzw. sind.

7. Reifen nach dem vorhergehenden Anspruch, wobei der thermoplastische Block bzw. die thermoplastischen Blöcke des Blockcopolymers aus Polystyrolen, die aus Styrolmonomeren aus der Gruppe bestehend aus unsubstituiertem Styrol, substituierten Styrolen und Mischungen davon erhalten wurden, ausgewählt ist bzw. sind.

8. Reifen nach dem vorhergehenden Anspruch, wobei der thermoplastische Block bzw. die thermoplastischen Blöcke des Blockcopolymers aus Polystyrolen, die aus Styrolmonomeren aus der Gruppe bestehend aus unsubstituiertem Styrol, Methylstyrolen, para-tert-Butylstyrol, Chlorstyrolen, Bromstyrolen, Fluorstyrolen, para-Hydroxystyrol und Mischungen davon erhalten wurden, ausgewählt ist bzw. sind.

9. Reifen nach einem der vorhergehenden Ansprüche, wobei der thermoplastische Block bzw. die thermoplastischen Blöcke des Blockcopolymers aus Polystyrolen, die aus Styrolmonomeren aus der Gruppe bestehend aus unsubstituiertem Styrol, o-Methylstyrol, m-Methylstyrol, p-Methylstyrol, alpha-Methylstyrol, alpha-2-Dimethylstyrol, alpha-4-Dimethylstyrol, Diphenylethylen, para-tert-Butylstyrol, o-Chlorstyrol, m-Chlorstyrol, p-Chlorstyrol, 2,4-Dichlorstyrol, 2,6-Dichlorstyrol, 2,4,6-Trichlorstyrol, o-Bromstyrol, m-Bromstyrol, p-Bromstyrol, 2,4-Dibromstyrol, 2,6-Dibromstyrol, 2,4,6-Tribromstyrol, o-Fluorstyrol, m-Fluorstyrol, p-Fluorstyrol, 2,4-Difluorstyrol, 2,6-Difluorstyrol, 2,4,6-Trifluorstyrol, para-Hydroxystyrol und Mischungen davon erhalten wurden, ausgewählt ist bzw. sind.

10. Reifen nach dem vorhergehenden Anspruch, wobei der thermoplastische Block bzw. die thermoplastischen Blöcke des Blockcopolymers aus Polystyrolen, die aus unsubstituiertem Polystyrol erhalten wurden, ausgewählt ist bzw. sind.

11. Reifen nach einem der vorhergehenden Ansprüche, wobei es sich bei dem thermoplastischen Elastomer bzw. den thermoplastischen Elastomeren um die einzigen Elastomere der Lauffläche handelt.

12. Reifen nach einem der Ansprüche 1 bis 11, wobei die Lauffläche außerdem ein thermoplastisches Harz, das gegebenenfalls substituierte Polyphenylenether-Einheiten umfasst, umfasst.

13. Reifen nach Anspruch 12, wobei es sich bei dem thermoplastischen Harz auf Basis von gegebenenfalls substituierten Polyphenylenether-Einheiten um eine Verbindung handelt, die hauptsächlich Polyphenylen-Einheiten der allgemeinen Formel (I) umfasst: 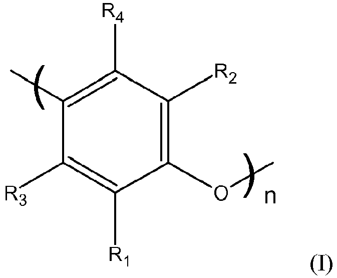 in der:
- R₁, R₂, R₃ und R₄ unabhängig voneinander für gleiche oder verschiedene Gruppen stehen, die aus Wasserstoff-, Hydroxy-, Alkoxy-, Halogen-, Amino-, alkylamino-, Dialkylamino- oder Kohlenwasserstoffgruppen mit mindestens 2 Kohlenstoffatomen, die gegebenenfalls durch Heteroatome unterbrochen und gegebenenfalls substituiert sind, ausgewählt sind; wobei R₁ und R₃ einerseits und R₂ und R₄ andererseits zusammen mit den Kohlenstoffatomen, an die sie gebunden sind, einen oder mehrere mit dem Benzolring der Verbindung der Formel (I) anellierten Ring bilden können,
- n für eine ganze Zahl in einem Bereich von 3 bis 300 steht.

14. Reifen nach einem der Ansprüche 12 oder 13, wobei der Gehalt des thermoplastischen Harzes auf Basis von gegebenenfalls substituierten Polyphenylenether-Einheiten in einem Bereich von 1 bis 90 phe, vorzugsweise von 2 bis 80 phe, liegt.

## Claims

1. Tyre comprising a tread, a crown with a crown reinforcement, two sidewalls, two beads, a carcass reinforcement anchored to the two beads and extending from one sidewall to the other, **characterized in that** the tread comprises at least one thermoplastic elastomer, said thermoplastic elastomer being a block copolymer comprising at least one elastomer block of butadiene/styrene random copolymer type and at least one thermoplastic block of styrene type, the SBR elastomer block(s) being hydrogenated such that a proportion extending from 25 mol% to 100 mol% of the double bonds in the butadiene portion are hydrogenated, and the total content of thermoplastic elastomer being within a range varying from 65 to 100 phr (parts by weight per hundred parts of elastomer).

2. Tyre according to any one of the preceding claims, wherein the SBR elastomer block(s) have a styrene content within a range extending from 10% to 60%.

3. Tyre according to any one of the preceding claims, wherein the SBR elastomer block(s) have a content of 1,2- bonds for the butadiene part within a range extending from 4 mol% to 75 mol% and a content of 1,4- bonds within a range extending from 20 mol% to 96 mol%.

4. Tyre according to any one of the preceding claims, wherein the SBR elastomer block(s) are hydrogenated such that a proportion extending from 50 mol% to 100 mol%, and preferably from 80 mol% to 100 mol% of the double bonds in the butadiene portion are hydrogenated.

5. Tyre according to any one of the preceding claims, wherein the fraction of thermoplastic styrene block in the block copolymer is within a range extending from 5% to 70%.

6. Tyre according to any one of the preceding claims, wherein the thermoplastic block(s) of the block copolymer are chosen from polystyrenes.

7. Tyre according to the preceding claim, wherein the thermoplastic block(s) of the block copolymer are chosen from polystyrenes obtained from styrene monomers selected from the group consisting of unsubstituted styrene, substituted styrenes and mixtures thereof.

8. Tyre according to the preceding claim, wherein the thermoplastic block(s) of the block copolymer are chosen from polystyrenes obtained from styrene monomers selected from the group consisting of unsubstituted styrene, methylstyrenes, para-tert-butylstyrene, chlorostyrenes, bromostyrenes, fluorostyrenes, para-hydroxystyrene and mixtures thereof.

9. Tyre according to the preceding claim, wherein the thermoplastic block(s) of the block copolymer are chosen from polystyrenes obtained from styrene monomers selected from the group consisting of unsubstituted styrene, o-methylstyrene, m-methylstyrene, p-methylstyrene, alpha-methyl styrene, alpha,2-dimethylstyrene, alpha,4-dimethylstyrene, diphenylethylene, para-tert-butyl styrene, o-chlorostyrene, m-chlorostyrene, p-chlorostyrene, 2,4-dichlorostyrene, 2,6-dichlorostyrene, 2,4,6-trichlorostyrene, o-bromostyrene, m-bromostyrene, p-bromostyrene, 2,4-dibromostyrene, 2,6-dibromostyrene, 2,4,6-tribromostyrene, o-fluorostyrene, m-fluorostyrene, p-fluorostyrene, 2,4-difluorostyrene, 2,6-difluorostyrene, 2,4,6-trifluorostyrene, para-hydroxystyrene and mixtures thereof.

10. Tyre according to the preceding claim, wherein the thermoplastic block(s) of the block copolymer are obtained from unsubstituted polystyrene.

11. Tyre according to any one of the preceding claims, wherein the thermoplastic elastomers are the only elastomers of the tread.

12. Tyre according to any one of Claims 1 to 11, wherein the tread additionally comprises a thermoplastic resin comprising optionally substituted polyphenylene ether units.

13. Tyre according to either of Claims 12, wherein the thermoplastic resin based on optionally substituted polyphenylene ether units is a compound comprising predominantly polyphenylene units of general formula (I): 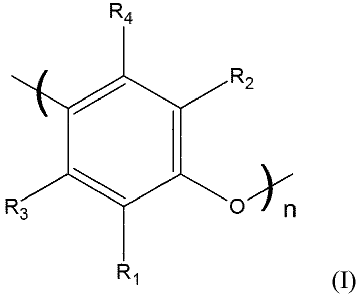 in which:
- R₁, R₂, R₃ and R₄ represent, independently of one another, identical or different groups selected from hydrogen, hydroxyl, alkoxy, halogen, amino, alkylamino or dialkylamino groups or hydrocarbon-based groups comprising at least 2 carbon atoms, optionally interrupted by heteroatoms and optionally substituted; R₁ and R₃ on the one hand, and R₂ and R₄ on the other hand, possibly forming, together with the carbon atoms to which they are attached, one or more rings fused to the benzene ring of the compound of formula (I),
- n is an integer within a range extending from 3 to 300.

14. Tyre according to either Claims 12 or 13, wherein the content of said thermoplastic resin based on optionally substituted polyphenylene ether units is within a range extending from 1 to 90 phr, preferably from 2 to 80 phr.
